# EUROPEAN PATENT APPLICATION

(11) **EP 2 337 191 A2**
(43) Date of publication of application: **22.06.2011**
(21) Application number: 10193976.7
(22) Date of filing: 07.12.2010
(51) Int. Cl.: H02K 9/19

(54) **Heat recovery system for vehicle**

(30) Priority: 16.12.2009 JP 2009284806
(71) Applicant: Kabushiki Kaisha Toyota Jidoshokki, Kariya-shi, Aichi 448-8671 (JP)
(72) Inventor: Adaniya, Taku, Kariya-shi, Aichi 448-8671 (JP); Fukasaku, Hiroshi, Kariya-shi, Aichi 448-8671 (JP); Yokomachi, Naoya, Kariya-shi, Aichi 448-8671 (JP); Suzuki, Junya, Kariya-shi, Aichi 448-8671 (JP); Kawaguchi, Masahiro, Kariya-shi, Aichi 448-8671 (JP)
(74) Representative: TBK

(57) **Abstract**

A heat recovery system includes an electric rotary device (1), a heat exchanger (2), a pipe (3A,3B) and a reservoir. The electric rotary device (1) has a stator core (7) and a housing (4). The stator core (7) is wounded with a coil (8). The heat exchanger (2) provides heat exchanging between first and second heat medium. The first heat medium is in contact with the coil (8) and absorbs heat from the coil. The pipe (3A,3B) connects the electric rotary device (1) to the heat exchanger (2) and transfers the first heat medium. The reservoir is formed in the housing and stores the first heat medium. The electric rotary device (1) has an insulative body (6). The insulative body (6) prevents heat of the first heat medium from being dissipated outside of the housing (4).

## Description

### BACKGROUND OF THE INVENTION

The present invention relates to a heat recovery system for a vehicle.

Japanese Patent Application Publication 2008-148464 discloses a motor used to drive wheels of a vehicle. This motor has a stator core and a rotor in a housing of the motor. A coil is wound around the stator core and the rotor is mounted on a shaft of the motor. Annular jackets are fixed to the stator core on opposite sides thereof at positions adjacent to the coil. A passage of oil for cooling the coil is formed in each jacket. The jacket has formed therein an inlet and an outlet of the oil passage, and a pipe is connected to the inlet and the outlet. The housing may reserve oil flowing out from the outlet of the oil passage. Another pipe is connected in the bottom of the housing. A pump circulating oil and a reservoir tank storing oil are connected in the pip.

In the above motor, however, the heat recovered from the coil by the oil is only wasted without being utilized for air-conditioning or improvement of fuel efficiency of the vehicle.

For effective utilization of the heat wasted heretofore, a heat exchanger may be connected through pipes to the motor for heat exchanging between the heated oil and any other medium, thereby making a heat recovery system. If air is used as the medium to be heated in the heat exchanging, the air may be utilized for air conditioning.

In the above motor, jacket is disposed adjacent to the coil, but the oil in the jacket is not in direct contact with the coil. Therefore, heat of the coil isn't conducted to the oil effectively and heat of the coil is not recovered efficiently. This problem is true of a generator substituted for the motor.

In the above motor, no insulator is provided for insulating the housing, so that heat of the oil is dissipated out of the housing. If the motor is used with the aforementioned heat exchanger, the heat developed by the motor or generator cannot be transmitted effectively to the heat exchanger.

The present invention that has been made in light of the above problem is directed to providing a heat recovery system that collects heat of an electric rotary device and transmits the collected heat to a heat exchanger efficiently.

### SUMMARY OF THE INVENTION

A heat recovery system includes an electric rotary device, a heat exchanger, a pipe and a reservoir. The electric rotary device has a stator core and a housing. The stator core is wound with a coil. The heat exchanger provides heat exchanging between first and second heat media. The first heat medium is in contact with the coil and absorbs heat therefrom. The pipe connects the electric rotary device to the heat exchanger and transfers therethrough the first heat medium. The reservoir is formed in the housing and stores therein the first heat medium. The electric rotary device has an insulative body. The insulative body prevents the heat of the first heat medium from being dissipated outside the housing.

### BRIEF DESCRIPTION OF THE DRAWINGS

The invention together with objects and advantages thereof, may best be understood by reference to the following description of the presently preferred embodiments together with the accompanying drawings in which:
Fig.1 is a longitudinal sectional view showing a configuration of a heat recovery system according to a first preferred embodiment of the present invention;
Fig.2 is a fragmentary partially enlarged longitudinal sectional view showing a part of the heat recovery system according to the first preferred embodiment of the present invention;
Fig.3 is also a fragmentary partially enlarged longitudinal sectional view showing another part of the heat recovery system according to the first preferred embodiment of the present invention;
Fig.4 is a front view showing a enlarged portion of configuration of a heat recovery system according to the first preferred embodiment of the present invention;
Fig.5 is a front view similar to Fig. 4, but showing a heat recovery system according to a second preferred embodiment of the present invention;
Fig.6 is a front view similar to Fig. 4, but showing a heat recovery system according to a third preferred embodiment of the present invention;
Fig.7 is a longitudinal sectional view similar to Fig. 2, but showing a heat recovery system according to a fourth preferred embodiment of the present invention;
Fig.8 is a longitudinal sectional view similar to Fig. 2, but showing a heat recovery system according to a fifth preferred embodiment of the present invention;
Fig.9 is a longitudinal sectional view similar to Fig. 3, showing a heat recovery system according to a sixth preferred embodiment of the present invention;
Fig.10 is a longitudinal sectional view similar to Fig. 3, but showing a heat recovery system according to a seventh preferred embodiment of the present invention;
Fig.11 is a longitudinal sectional view similar to Fig. 3, but showing a heat recovery system according to an eighth preferred embodiment of the present invention;
Fig.12 is a longitudinal sectional view similar to Fig. 3, but showing a heat recovery system according to a ninth preferred embodiment of the present invention;
Fig.13 is a longitudinal sectional view similar to Fig. 2, but showing a reference example of a heat recovery system;
Fig.14 is a longitudinal sectional view similar to Fig. 2, but showing a heat recovery system according to a tenth preferred embodiment of the present invention;
Fig.15 is a fragmentary partially enlarged longitudinal sectional view showing a part of a heat recovery system according to a eleventh preferred embodiment of the present invention;
Fig.16 is a fragmentary partially enlarged longitudinal sectional view similar to Fig. 15, but showing a heat recovery system according to a twelfth preferred embodiment of the present invention;

### DETAILED DESCRIPTION OF THE PREFERRED EMBODIMENT

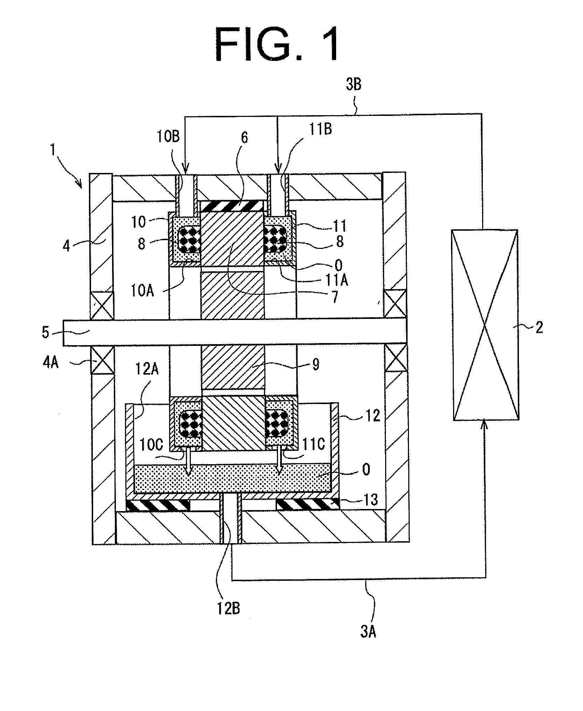

The following will describe a heat recovery system according to the first embodiment of the present invention as used for a vehicle with reference to Figs. 1 through 4.

Referring to Fig.1, the heat recovery system includes a motor 1 as a electric rotary device, a heat exchanger 2 and pipes 3A, 3B. The pipes 3A, 3B connect the motor 1 to the heat exchanger 2 and allows oil O as first heat exchange medium to flow therebetween.

The motor 1 has a housing 4 and a rotary shaft 5 rotatably supported by the rotary shaft 5 via bearings 4A. A stator core 7 is fixed to the inner periphery of the housing 4 through an insulator 6 as an auxiliary insulative body. Rubber is used as the material of the insulator 6. The stator core 7 has a plurality of slots spaced equiangularly and extending axially of the stator core 7 and a coil 8 is wound in the slots of the stator core 7. A rotor 9 is fixedly mounted on the rotary shaft 5 inside the stator core 7. A permanent magnet (not shown) is fixed in the rotor 9.

Annular heat absorbing jackets 10, 11 are fixed to the stator core 7 on the opposite axial ends thereof.

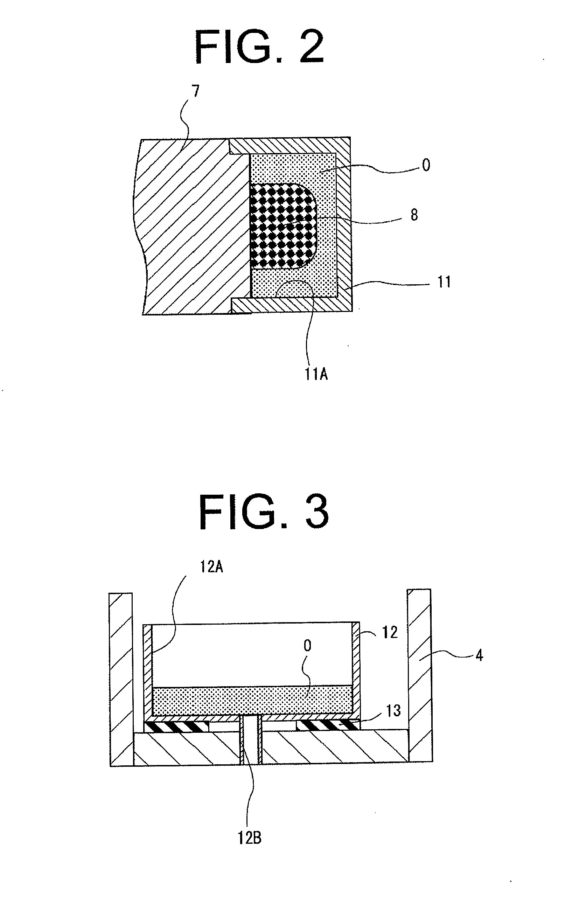

Referring to Fig.2 showing only the heat absorbing jacket 11, the heat absorbing jacket 10, 11 has formed therein a passage 10A, 11 A of oil O, covering the coil 18. Referring to Fig. 1, the stator core 7 is fixed to the inner periphery of the housing 4 through an insulator 6, and the heat absorbing jacket 10, 11 is fixed to the heat absorbing jacket 10, 11, so that the heat absorbing jacket 10, 11 is also insulated from the housing 4 by the insulator 6.

The heat absorbing jackets 10, 11 have inlets 10B, 11 B far the oil passages 10A, 11 B extending upward and opened at the top, respectively. As shown in Fig. 1, the pipe 3B extending from the heat exchanger 2 is branched for connection to the inlets 10B, 11 B. The oil O from the heat exchanger 2 is transferred into the oil passages 10A, 11A through the pipe 3B and the inlets 10B, 11 B. The heat absorbing jackets 10, 11 have at the bottom thereof outlets 10C, 11C opened downward, respectively. The oil O in the passages 10A, 11A flows out therefrom through the outlets 10C, 11C. The diameter of the outlets 10C, 11C is smaller than that of the inlets 10B, 11 B.

Referring to Fig.3, a tank 12 is disposed in the bottom of the housing 4 at a position corresponding to the heat absorbing jacket 10, 11. The volume of the tank 12 is lager than the total volume of the stator core 7 and the heat absorbing jacket 10, 11 so that the oil O from the heat absorbing jacket 10, 11 is received successfully by the tank 12. Leg portions 13 made of heat insulation material are disposed between the housing 4 and the tank 12. A storage chamber 12A storing oil O is formed inside the tank 12. The storage chamber 12A is disposed in the housing 4 at a position corresponding to the bottom of the heat absorbing jacket 10, 11. The storage chamber 12A is open at the top thereof. The tank 12 has an outlet 128 extending downward from bottom of the storage chamber 12A for connection to the heat exchanger 2. As shown in Fig.1, the outlet 12B is connected to the heat exchanger 2 through the pipe 3A.

The heat exchanger 2 functions to exchange heat between the oil O and the air as second heat medium. A pump (not shown) is disposed in each of the pipes 3A, 3B.

ln this heat recovery system for a vehicle, electric current flowing in the coil 8 of the motor 1 creates magnetic field between the stator core 7 and the rotor 9, so the rotor 9 and hence the rotary shaft 5 are rotated. The rotary shaft 5 is operatively connected to a drive shaft of the vehicle. During the operation of the motor 1 ,heat is produced in the coil 8.

When the pump (not shown) in this heat recovery system for a vehicle is started, the oil O is circulated through the heat absorbing jackets 10, 11, the tank 12, the pipes 3B, and the heat exchanger 2. Therefore, the oil O in the pipe 3B is flowed into the passages 10A, 11A of the heat absorbing jackets 10, 11 via the inlets 108, 11B. Referring to Fig.2, the oil O stored in the passage 10A, 11A is in direct contact with the coil, so that the heat of the coil 8 is transferred to the oil 0 efficiently. Thus, the oil O absorbs and recovers heat from the coil 8 efficiently.

The oil 0 in the passages 10A, 11A is stored in the heat absorbing jackets 10, 11 temporarily and then flowed through the inlets 10C, 11C into the storage chamber 12A of the tank 12, where the oil O is reserved, as shown in Fig. 3. The leg portions 13 made of heat insulation material and disposed between the housing 4 and the tank 12 prevent the heat of the oil O from being dissipated outside of the housing.

Thus, the heat recovery system for a vehicle according to the above-described embodiment of the present invention can transfer the heat from the motor 1 to the heat exchanger 2 efficiently. If this system is adapted to heat the air in a vehicle by using the heat exchanger 2, air conditioning may be provided. Furthermore, the motor 1 may be cooled efficiently, so that the motor 1 is operated with an increased efficiency.

Additionally, the motor 1 may be made through improvement of an existing motor, so that the heat recovery system of the above embodiment of the invention may be made economical.

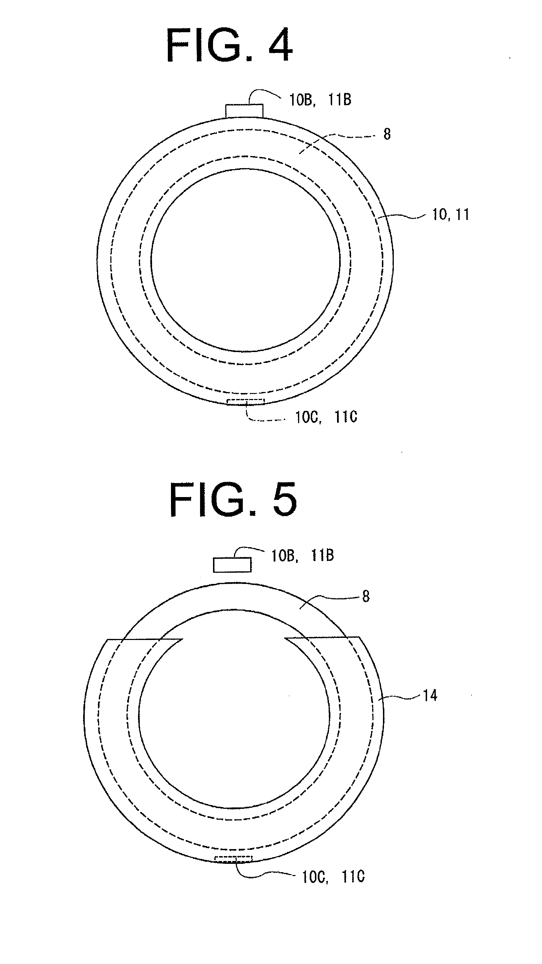

Referring to Fig.5, the heat recovery system according to the second embodiment of the present invention differs from that of the first embodiment in that a heat absorbing jacket 14 of a crescent-shape is used. The oil O flowing into the oil passages 10A, 11A through the inlets 10B, 11B is transferred along the coil 8 and stored in the heat absorbing jacket 14 temporarily. Other advantageous effects are the same as those of the heat recovery system according to the first embodiment.

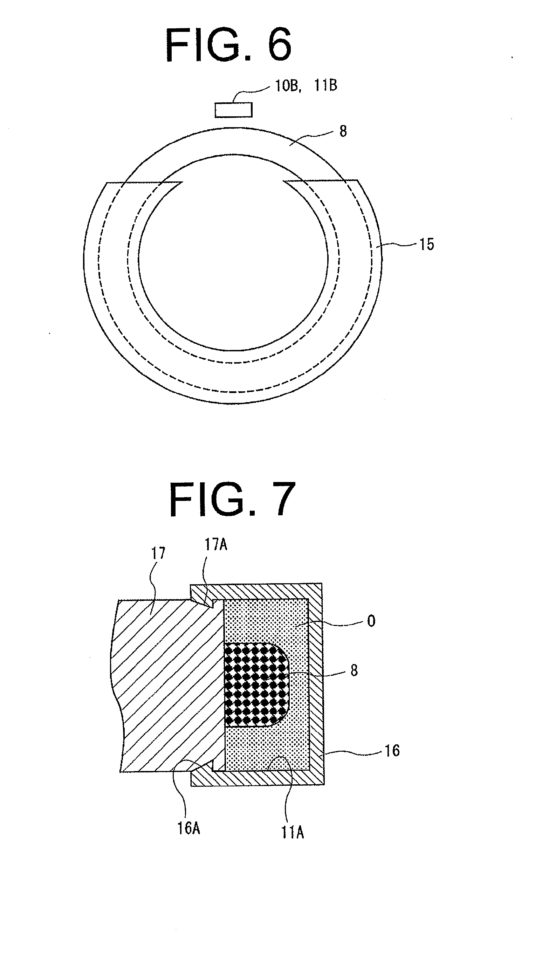

Referring to Fig.6, the heat recovery system according to the third embodiment of the present invention differs from that of the second embodiment in that a heat absorbing jacket 15 having no inlet such as 10C, 11C is used. The rest of the structure of the heat recovery system is substantially the same as that of the heat recovery system according to the second embodiment. This system offers the same advantageous effects as heat recovery system according to the second embodiment.

Referring to Fig.7 showing the heat recovery system according to the fourth embodiment of the present invention, the stator core 17 has a recess 17A and the heat absorbing jacket 16 has a projection 16A which is engaged with the recess 17A of the stator core 17 so that the heat absorbing jacket 16 is secured to the stator co re 17. The provision of such projection 16A and the recess 17A helps to facilitate assembling of the motor 1. Other advantageous effects are the same as those of the heat recovery system according to the first embodiment.

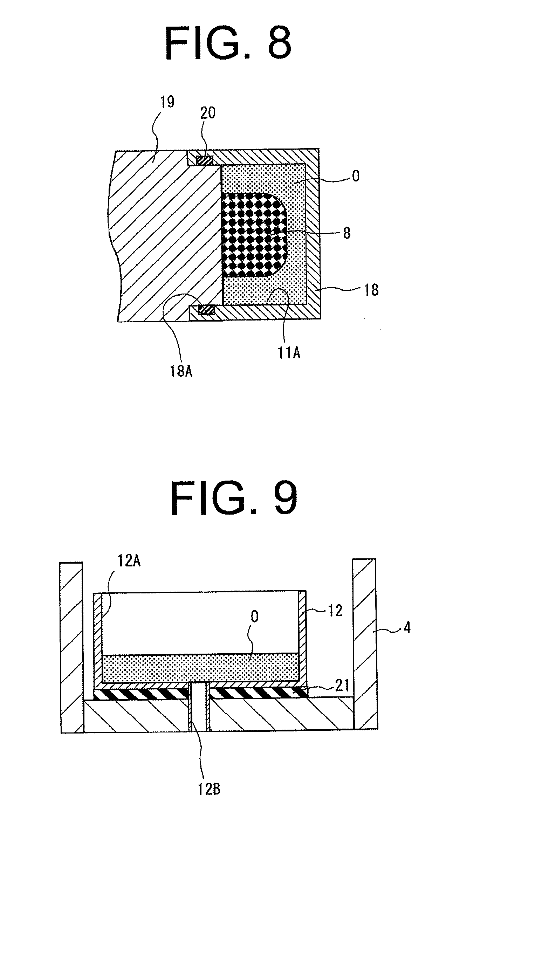

Referring to Fig.8 showing the heat recovery system according to the fifth embodiment of the present invention, the heat absorbing jacket 18 has formed therein a seal groove 18a. A heat resistant seal 20 is fitted in the seal groove 18a for sealing between the heat absorbing jacket 18 and the stator core 19. Thus, oil O is prevented from leaking from the passage 10A, 11A, so that the heat of the coil 8 is transferred to the oil O efficiently. Other advantageous effects are the same as those of the heat recovery system according to the first embodiment.

Referring to Fig.9 showing the heat recovery system according to the sixth embodiment of the present invention, a sheet-like insulator 21 is provided between the tank 12 and the housing 4. The rest of the structure of the heat recovery system is substantially same as that of the first embodiment. This system offers the same advantageous effects as heat recovery system according to the first embodiment.

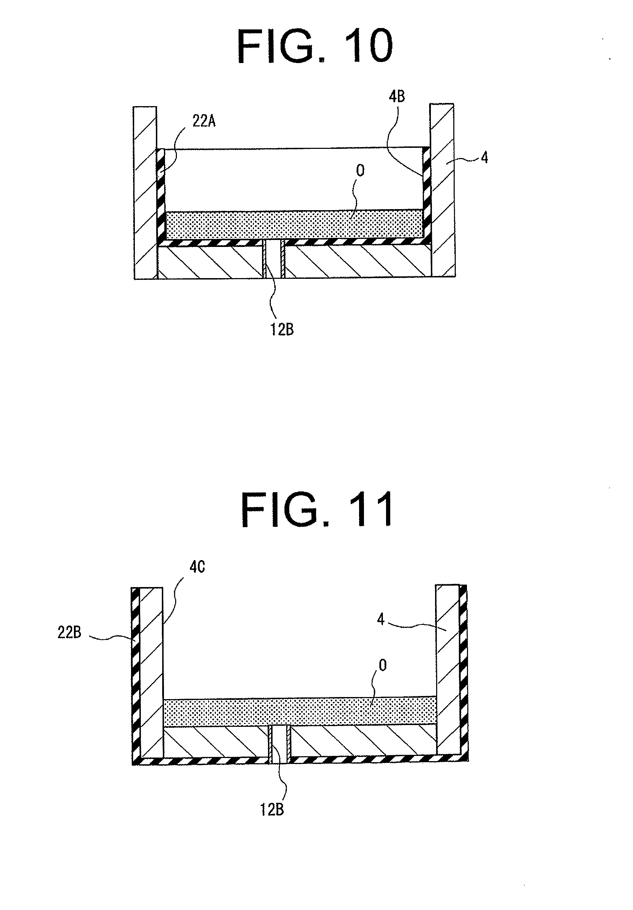

Referring to Fig. 10 showing the heat recovery system according to the seventh embodiment of the present invention, a heat insulating layer 22A as an insulative body is provided on part of the inner surface of the housing 4 thereby to form a storage chamber 4b. The rest of the structure of the heat recovery system is substantially the same as that according to the first embodiment. According to this embodiment, a new motor 1 can be manufactured by forming the heat insulating layer 22A on the housing of existing motor, so that this system is economical. Other advantageous effects are the same as the heat recovery system according to the first embodiment.

The heat insulating layer 22A may be made of any suitable heat insulating or reflecting material. For example, heat reflecting coating, paint, plate, or mirror finish may be used for the heat insulating layer 22A.

Referring to Fig.11 showing the heat recovery system according to the eighth embodiment of the present invention, a heat insulating layer 22B is provided as an insulative body on part of the outer peripheral surface of the housing 4. As shown in Fig. 11, the oil storage chamber 4C is formed, surrounded by the heat insulating layer 22A. The rest of the structure of the heat recovery system is substantially the same as that according to the first embodiment. This system offers the same advantageous effects as the heat recovery system according to the seventh embodiment.

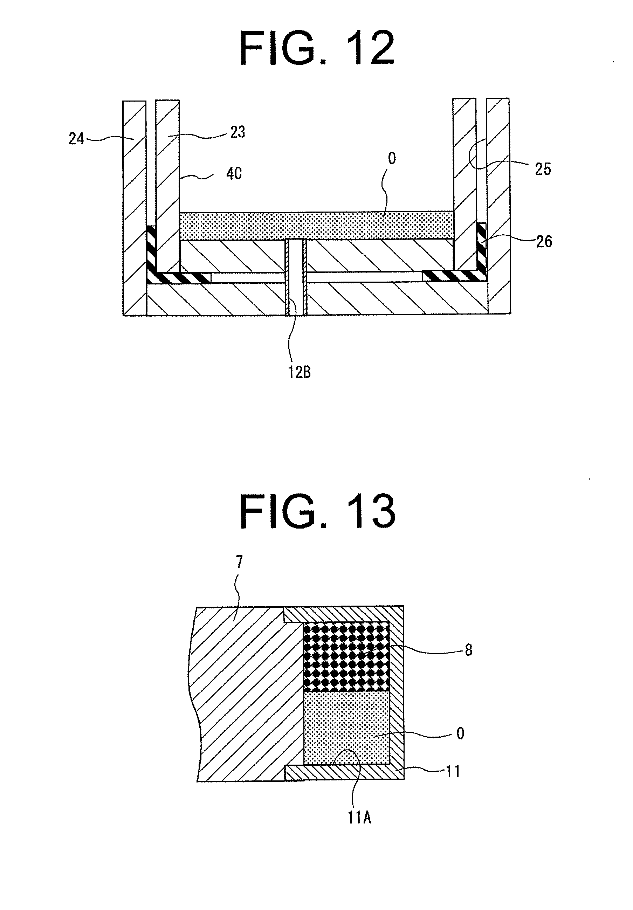

Referring to Fig.12, the heat recovery system according to the ninth embodiment of the present invention has a housing 23 and a second or outer housing 24 disposed so as to surround the housing 23 through an interspace 25 of air. An insulator 26 is interposed between the housing 23 and the outer housing 24. The insulator 26 serves to maintain the interspace between the housing 23 and the outer housing 24. The storage chamber 4C is formed, surrounded by the housing 23. The rest of the structure is the same as that of the heat recovery system according to the first embodiment. This system offers the same advantageous effects as heat recovery system according to the first embodiment.

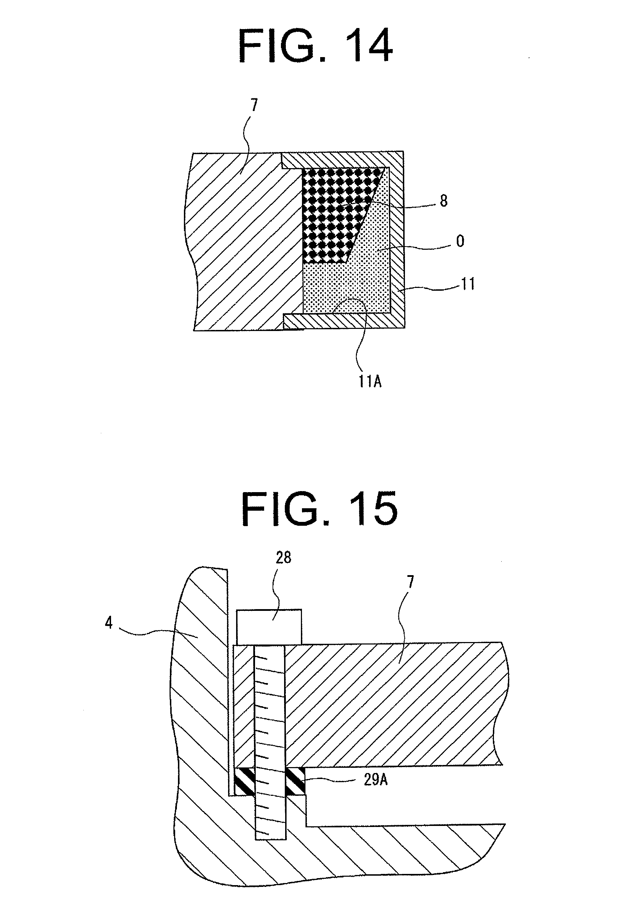

As shown Fig.13, the coil 8 may be located to one side of the heat absorbing jacket 11. In this case, the contact area between the oil O and the coil 8 is small, so that the oil O has difficulty in absorbing heat from the coil 8. Referring to Fig.14 showing the heat recovery system according to the tenth embodiment of the present invention, the coil 8 is wound in such a way that increases the contact area between the oil O and the coil 8 keeping the same volume of the coil 8 covering in the heat absorbing jacket 11 as that shown in Fig. 13.

Referring to Fig.15 the heat recovery system according to the eleventh embodiment of the present invention, a rubber washer 29A as an auxiliary insulative body is provided between the housing 4 and the stator core 7. The housing 4 and the stator core 7 are fastened together by bolts 28 (only one bolt being shown in the drawing). The rest of the structure of the heat recovery system is substantial the same as that according to the first embodiment. The system according to this eleventh embodiment prevents the heat of the coil 8 from being dissipated outside the housing 4 through the stator core 7. Space formed by addition of the rubber washer 29A may be used for passage of oil O. Other advantageous effects are the same as those of the heat recovery system according to the first embodiment.

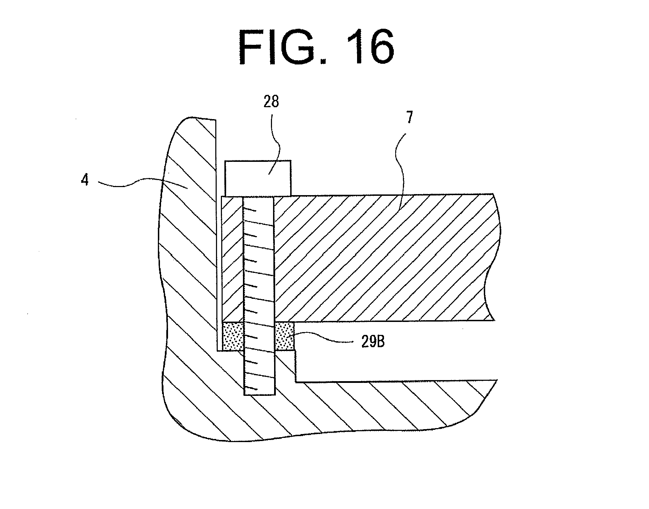

Referring to Fig.16, the heat recovery system according to the twelfth embodiment of the present invention differs from that of the above eleventh embodiment in that a ceramic washer 29B is provided between the housing 4 and the stator core 7 instead of the rubber washer 29A. The rest of the structure of the heat recovery system is substantially the same as according to the eleventh embodiment. This system offers the same advantageous effects as the heat recovery system according to the eleventh embodiment.

According to the present invention, oil as the first heat medium may be substituted for water. Additionally, air as the second heat medium may be substituted for water.

According to the present invention, the motor may be substituted for a generator. The heat recovery system of the present invention may be used for a motor, for example, of a train, an airplane. The coil of the motor may be wound in any way, including concentrated winding, wave winding, distributed winding.

A heat recovery system includes an electric rotary device, a heat exchanger, a pipe and a reservoir. The electric rotary device has a stator core and a housing. The stator core is wounded with a coil. The heat exchanger provides heat exchanging between first and second heat medium. The first heat medium is in contact with the coil and absorbs heat from the coil. The pipe connects the electric rotary device to the heat exchanger and transfers the first heat medium. The reservoir is formed in the housing and stores the first heat medium. The electric rotary device has an insulative body. The insulative body prevents heat of the first heat medium from being dissipated outside of the housing.

## Claims

1. A heat recovery system comprising:
an electric rotary device (1) having a stator core (7,17,19) and a housing (4,23) , said stator core (7,19,19) being wound with a coil (8);
a heat exchanger (2) providing heat exchanging between first and second heat media, said first heat medium being in contact with the coil (8) and absorbing heat from the coil (8);
a pipe (3A,3B) connecting the electric rotary device (1) to the heat exchanger (2) and transferring therethrough the first heat medium; and
a reservoir of the first heat medium formed in the housing, said electric rotary device (1) having an insulative body preventing heat of the first heat medium from being dissipated outside of the housing (4,23).

2. The heat recovery system according to claim 1, wherein the reservoir has a heat absorbing jacket (10,11,14,15,16,18) covering the coil (8) and forming therein a passage (10A,11A) of the first heat medium.

3. The heat recovery system according to claim 1 or claim 2, wherein the reservoir has a storage chamber (4B,4C,12A) storing the first heat medium.

4. The heat recovery system according to claim 1, wherein:
the reservoir has a heat absorbing jacket (10,11,14,15,16,18) covering the coil (8) and forming therein a passage (10A,11A) of the first heat medium and a storage chamber (48,40,12A) storing the first heat medium;
the pipe (3A,3B) is connected in the top of the heat absorbing jacket (10,11,14,15,16,18) at the upstream side of the electric rotary device;
the storage chamber (4B,4C,12A) is disposed in the bottom of the housing at a position corresponding to the heat absorbing jacket (10,11,14,15,16,18);
and the pipe (3A,3B) is connected in the bottom of the storage chamber (4B,4C,12A) at the downstream side of the electric rotary device (1).

5. The heat recovery system according to claim 3 or claim 4, wherein the insulative body supports a tank (12) having a top that is open and an interior that is used as the storage chamber (12A).

6. The heat recovery system according to claim 5, wherein the insulative body is a leg portion (13) disposed between the housing (4) and the tank (12).

7. The heat recovery system according to claim 6, wherein the leg portion (13) is made of heat insulation material.

8. The heat recovery system according to claim 5, wherein the insulative body is an insulator (21) disposed between the housing (4) and the tank (12).

9. The heat recovery system according to claim 3 or claim 4, wherein the insulative body is a heat insulating layer (22A) provided on an inner surface of the housing (4) and forming the storage chamber.

10. The heat recovery system according to claim 3 or claim 4, wherein the insulative body is a heat insulating layer (22B) provided on an outer surface of the housing (4).

11. The heat recovery system according to claim 3 or claim 4, wherein the insulative body is the housing (23) surrounding the reservoir and a second housing (24) disposed so as to surround the housing (23) through an interspace (25,26).

12. The heat recovery system according to any one of claims 1 through 11, wherein an auxiliary insulative body is disposed between the housing (4) and the stator core (7).

13. The heat recovery system according to claim 12, wherein the auxiliary insulative body is a leg portion (29A,29B) disposed between the housing (4) and the stator core (7).

14. The heat recovery system according to claim 12 or claim 13, wherein the auxiliary insulative body is made of heat insulation material.
